# EUROPEAN PATENT APPLICATION

(11) **EP 2 547 064 A1**
(43) Date of publication of application: **16.01.2013**
(21) Application number: 11856628.0
(22) Date of filing: 01.08.2011
(51) Int. Cl.: H04L 29/06

(54) **VIDEO-BASED METHOD, SERVER AND SYSTEM FOR REALIZING VALUE-ADDED SERVICE**

(71) Applicant: Huawei Technologies Co. Ltd., Longgang District Shenzhen Guangdong 518129 (CN)
(72) Inventor: WANG, Huan, Shenzhen, Guangdong 518129 (CN); HU, Xun, Shenzhen, Guangdong 518129 (CN); ZHONG, Jieping, Shenzhen, Guangdong 518129 (CN)
(74) Representative: Körber, Martin Hans
(86) International application number: PCT/CN2011/077854
(87) International publication number: WO 2012/159359

(57) **Abstract**

Embodiments of the present invention provide a method, a server, and a system for implementing a video-based value-added service. The method includes: acquiring, by an event server, association event data which corresponds to a video currently played by a first client; when detecting an event trigger condition, generating, by the event server, an event notification according to the association event data, and sending the event notification to an application server; forming, by the application server, value-added service content according to preset value-added service data and event data in the event notification, and providing the value-added service content for a second client. According to the method, the server, and the system for implementing the video-based value-added service provided in the embodiments of the present invention, the association event data of the video currently played is generated, and the value-added service content that is closely associated with a played video is generated according to the association event data, thereby enhancing correlation between the value-added service and a video and optimizing the matching between the value-added service and the video.

## Description

### FIELD OF THE INVENTION

The embodiments of the present invention relates to network data technologies, and in particular, to a method, a server, and a system for implementing a video-based value-added service.

### BACKGROUND OF THE INVENTION

With the gradual convergence of the Internet, a digital television network, and a communication network, a telecom carrier or a television carrier is capable of simultaneously providing multiple services, such as video services, Internet, and communication services. The video service, as one of the main entertainment manners of users, has a huge market demand, and plays an important role in improving user experience and enhancing user stickiness. Therefore, a video-based valued-added service becomes focus of attention which each carrier competes for.

In the prior art, a major manner of providing a value-added service based on video content is playing an advertisement during a period of video playing. A video service inter-cut advertisement is generally arranging advertisement content and video program content together to play when the video is played.

However, the advertisement inter-cut in the video content may be irrelevant to content of the video that is currently played, or may be an association of coarse granularity, and an advertisement owner cannot make a fine match for the advertisement content and the video.

### SUMMARY OF THE INVENTION

Embodiments of the present invention provide a method, a server, and a system for implementing a video-based value-added service, so as to enhance correlation between a value-added service and a video and optimize the matching between the value-added service and the video.

An embodiment of the present invention provides a method for implementing a video-based value-added service, where the method includes:
acquiring, by an event server, association event data which corresponds to a video currently played by a first client;
when detecting an event trigger condition, generating, by the event server, an event notification according to the association event data, and sending the event notification to an application server; and
forming, by the application server, value-added service content according to preset value-added service data and event data in the event notification, and providing the value-added service content for a second client.

An embodiment of the present invention further provides a method for implementing a video-based value-added service, where the method includes:
sending, by a second client, a service acquisition request, and receiving returned value-added service content, where the value-added service content is formed according to association event data which corresponds to a video currently played by a first client.

An embodiment of the present invention further provides a service subsystem, including:
an event acquiring module, configured to acquire association event data which corresponds to a video currently played by a first client;
an event processing module, configured to, when detecting an event trigger condition, generate an event notification according to the association event data, and send the event notification to a content forming module; and
a content forming module, configured to form value-added service content according to preset value-added service data and event data in the event notification, and provide the value-added service content for a second client.

An embodiment of the present invention further provides an event server, including:
an event acquiring module, configured to acquire association event data which corresponds to a video currently played by a first client;
an event processing module, configured to, when detecting an event trigger condition, generate an event notification according to the association event data; and
an event communication module, configured to send the event notification to an application server to instruct the application server to form value-added service content according to the event notification and provide the value-added service content for a second client.

An embodiment of the present invention further provides an application server, including:
a notification receiving module, configured to receive an event notification generated by an event server according to association event data, where the association event data corresponds to a video currently played by a first client;
a content forming module, configured to form value-added service content according to preset value-added service data and event data in the event notification, and provide the value-added service content for a second client; and
a service registering module, configured to receive a value-added service registration request sent by the second client, and establish an association between the first client and the second client according to the value-added service registration request.

An embodiment of the present invention further provides a video server, including:
a video playing module, configured to provide a video playing service for a first client; and
an event notifying module, configured to provide for a service subsystem association event data which corresponds to a video currently played by the first client, so as to form value-added service content according to the association event data.

According to the method, the server, and the system for implementing the video-based value-added service provided in the embodiments of the present invention, the association event data of the video currently played is generated, and the value-added service content that is closely associated with the played video content is generated according to the association event data, thereby enhancing correlation between the value-added service and video content and optimizing the matching between the value-added service and the video content. Multiple types of video-associated value-added service content may be generated by utilizing rich, accurate, and real-time association event data, thereby providing support capabilities for a carrier and a service provider to develop a high-value value-added service.

### BRIEF DESCRIPTION OF THE DRAWINGS

FIG. 1 is a flow chart of a method for implementing a video-based value-added service according to a first embodiment of the present invention;

FIG. 2 is a schematic diagram of an architecture of a system to which a method for implementing a video-based value-added service is applicable according to an embodiment of the present invention;

FIG. 3 is a flow chart of a method for implementing a video-based value-added service according to a second embodiment of the present invention;

FIG. 4 is a signaling flow chart of registration which corresponds to a second embodiment of the present invention;

FIG. 5 is a signaling flow chart of a video switching processing process which corresponds to a third embodiment of the present invention;

FIG. 6 is a flow chart of a method for implementing a video-based value-added service according to a fourth embodiment of the present invention;

FIG. 7 is a flow chart of a method for implementing a video-based value-added service according to a fifth embodiment of the present invention;

FIG. 8 is a signaling flow chart of video playing control which corresponds to a fifth embodiment of the present invention;

FIG. 9 is a signaling flow chart of a method for implementing a video-based value-added service according to a sixth embodiment of the present invention;

FIG. 10 is a signaling flow chart of a method for implementing a video-based value-added service according to a seventh embodiment of the present invention;

FIG. 11 is a signaling flow chart of a method for implementing a video-based value-added service according to an eighth embodiment of the present invention;

FIG. 12 is a schematic structural diagram of a service subsystem according to a ninth embodiment of the present invention;

FIG. 13 is a schematic structural diagram of an event server according to a tenth embodiment of the present invention;

FIG. 14 is a schematic structural diagram of an application server according to an eleventh embodiment of the present invention;

FIG. 15 is a schematic structural diagram of a video server according to a twelfth embodiment of the present invention.

### DETAILED DESCRIPTION OF THE EMBODIMENTS

To make the objectives, the technical solutions, and the advantages of the embodiments of the present invention clearer, the technical solutions in the embodiments of the present invention are clearly and completely described in the following with reference to the accompanying drawings in the embodiments of the present invention. Apparently, the embodiments to be described are merely a part rather than all of the embodiments of the present invention. All other embodiments acquired by persons skilled in the art based on the embodiments of the present invention without creative efforts shall fall within the protection scope of the present invention.

### Embodiment 1

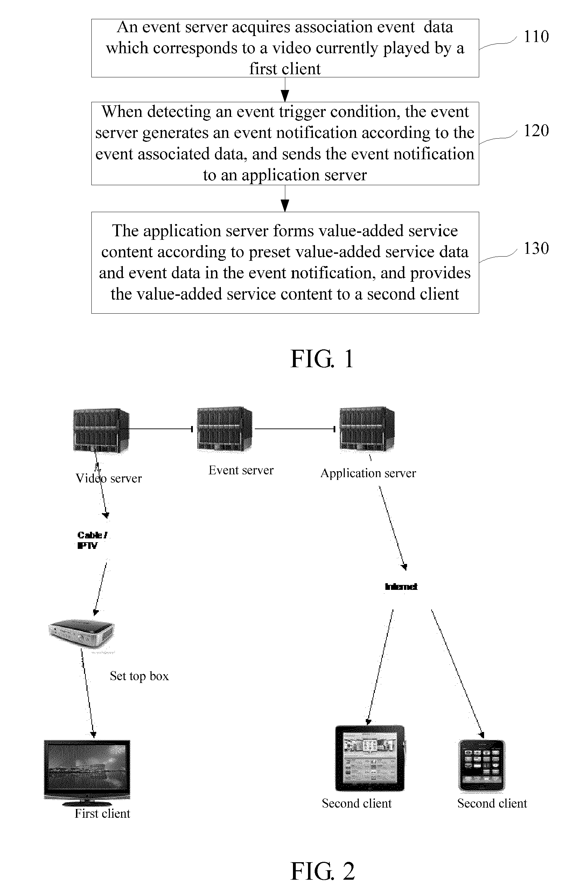

FIG. 1 is a flow chart of a method for implementing a video-based value-added service according to a first embodiment of the present invention. The implementation of the video-based value-added service generally involves devices on a network side and a terminal side. A device on the terminal side may be referred to as a client. A form of the client may be diversified, such as a set top box (Set Top Box, abbreviated as STB) which is connected to a television, a personal computer and a mobile terminal which are installed with client software. According to its function, a device on the network side may further be classified into a service subsystem and a video subsystem which provides a video playing function. The video subsystem may be implemented in a form of a video server (Video Server), and is mainly configured to provide a video playing service. The service subsystem is configured to provide the video-based value-added service. These two types of devices may be integrated at a hardware layer, and may also be set independently; and they may be an independent server network element, and may also be a network service platform which is formed by combination of multiple servers.

In actual application, a function of the service subsystem may be preferentially divided into two aspects: event processing and application processing, which are completed by an event server (Event Server) and an application server (Application Server), respectively. And then, an architecture of a system for performing the method for implementing the video-based value-added service according to the embodiment of the present invention may be typically shown in FIG. 2. The network side includes the video server, the event server, and the application server. The terminal side includes a first client and a second client. The first client is, for example, the set top box which is connected to the television. The second client may also be referred to as an application client, which is a mobile terminal, such as a tablet computer, a portable computer, and a mobile phone.

In this embodiment, the method for implementing the video-based value-added service is specifically executed by the event server and the application server that are in the service subsystem which provides a value-added service, which includes the following steps:

Step 110: The event server acquires association event data which corresponds to a video currently played by the first client.

Step 120: When detecting an event trigger condition, the event server generates an event notification according to the association event data, and sends the event notification to the application server.

Step 130: The application server forms value-added service content according to preset value-added service data and event data in the event notification, and provides the value-added service content for the second client.

In the technical solutions of this embodiment, the association event data is event data which has correspondence with the video currently played by the first client, and their correspondence may have multiple embodying manners. For example, content information, ownership information, or attribute type information which reflects the video currently played are used to provide a basis for forming the value-added service content. A typical value-added service includes an advertisement, and a form of the advertisement may also be specifically includes a picture advertisement, a video advertisement, and a text advertisement, and so on.

The so-called event trigger condition is equivalent to a condition for triggering generation and pushing of the value-added service. The service subsystem may control the content and opportunity of pushing the value-added service by designing the event trigger condition. For example, a video playing progress, user requirements, and carrier requirements may all be factors to be considered for the event trigger condition. An exemplary implementation manner for the event server to detect the event trigger condition may include the following several manners:

One manner may be when the event server detects that the current time is consistent with a time trigger condition in the association event data, the event trigger condition is detected.

In this manner, the time trigger condition may be a time point associated with the video playing progress. For example, in a video of a football match, the association event data may include event content of "score a goal", and the time trigger condition of the "time" of scoring the goal. When the current time reaches a time point of scoring the goal, the time trigger condition is satisfied. The current time may be the current time point embodied according to a clock, and may also be a relative time point or a concept of a relative event length, that is, the current time determined according to video playing progress information, for example, a set time difference relative to a video start moment.

Another manner may be when the event server judges that attribute information in a received event acquisition request is consistent with an attribute trigger condition in the association event data, the event trigger condition is detected.

This manner is applicable to a case that the client requests triggering. For example, when it is indicated in the event acquisition request that a type attribute, a geographic location attribute, or a user preference attribute of the client that requests is consistent with the attribute trigger condition in the association event data, the event trigger condition is satisfied For example, if the video image presents a car, a keyword "car" in the attribute detection condition is satisfied, and then, the attribute trigger condition is satisfied.

Another manner is when the event server judges that a control operation in a received video control notification is consistent with a control trigger condition in the association event data, the event trigger condition is detected.

This manner takes a control operation of video playing as a trigger condition. For example, when a "pause" control operation for the video appears, if it is identified that the control trigger condition in the association event data is also "pause", the event trigger condition is satisfied, and the value-added service is formed and pushed.

In actual application, the content and forming manners of the event trigger condition are not limited to the several types in the foregoing description.

The value-added service content formed based on the association event data according to the technical solutions provided in this embodiment matches the video currently played, thereby enhancing correlation between the value-added service and the video, and optimizing the matching between the value-added service and the video content.

In the technical solutions according to this embodiment, the first client and the second client may be a same client, but different clients are preferentially adopted. A typical case is that the first client is a set top box which is connected to a monitor, and the second client is a mobile terminal such as a mobile phone of a user; or different first client and second client may also be two software client accounts which run on a same computer.

An advantage of adopting different terminals for the first client and the second client lies in that the value-added service pushed on the second client does not shelter the video played on the first client and does not interfere with user's watching. In addition, a selectable form of the second client may be diversified, which can enrich the operability of the second client. For example, an operating function of the tablet computer or the mobile phone is more flexible than an operating function of the set top box, which facilitates the interaction implementing between the second client and the network side device.

The first client may be a physical terminal, and may also be a logical terminal, for example, video playing software. In the architecture shown in FIG. 2, the first client is connected to the video server through a cable based on the Internet Protocol television (Internet Protocol Television, abbreviated as IPTV) protocol to acquire a video, and this part of function may be implemented by adopting the conventional technology. The set top box or another video playing device is configured to receive digital television and various data information, and through demodulation, demultiplexing, decoding, and audio and video coding, or through a corresponding data parsing module, play a digital television program and various data information on a television. The set top box is a device for receiving a video service, which generally has a unique device identifier (ID) and may be used as an identifier of the first client.

The second client is configured to acquire the video-based value-added service from the network side, which may be an independent physical terminal, and may also be a logic terminal. In the architecture shown in FIG. 2, the second client may be connected to the application server based on the IP protocol through the Internet to implement service information interaction. The second client may be a software client installed on multiple intelligent devices, including software and widgets (Widget) on devices such as the mobile phone, the tablet computer, and the PC.

The video server provides the video service for the user, including the IPTV or a digital television system. The video server may receive a video playing request from the first client and provide a video to be played. The video server may include a series of functions such as authentication, authorization, and coding and decoding of channel and content for a video playing device, for example, a television, of the user.

In the technical solutions according to this embodiment, the event server is utilized to be responsible for triggering an event notification, and the application server is utilized to be responsible for forming value-added service content.

The event server is mainly used to acquire the associate event data, and store and parse the data, and may generate the event notification according to the association event data and send the event notification to the application server. Specifically, the event server can acquire from the video server association event data of a certain channel or certain video content that is currently played, or can register a monitored channel or video event with the video server so as to acquire the association event data. An advantage of setting the event server independently lies in that a function of processing an event is independent of the value-added service, the application server processes the value-added service facing each second client, and the event server is responsible for processing the association event data of each video played, where the video may be provided for thousands of first clients simultaneously. The event server may process the association event data of the video in a unified manner, and provide the event notification for multiple application servers which have different requirements so as to match requirements of multiple application servers or multiple value-added services.

In one aspect, the application server receives the event notification sent by the event server, generates value-added service content which is associated with the video by utilizing the event notification, and presents the value-added service content to the user through the second client. In another aspect, the application server receives the value-added service acquisition request from the second client, where a focused event condition may be set in the request, and according to this, the focused association event data is requested from the event server. The application server forms the value-added service content according to the association data in the event notification in multiple manners, for example, in combination of a keyword that is associated with the video content in the association data, searching for the pre-stored content which corresponds to the keyword to be the value-added service content and pushing the content to the second client. The corresponding content may be an advertisement, and may also be information describing and explaining the video content. Or, the corresponding content may further be value-added service content which is generated according to text information of the video content and includes the text information, and the text information is pushed to the second client so that the user can durably acquire the text information for reading, which is unlike in the video where the text changes quickly along with the playing progress.

The subsequent embodiments of the present invention are described by taking the system architecture shown in FIG. 2 as an example. However, those skilled in the art may understand that each operation may also be completed by a service subsystem in another layout manner. In addition, the event server and the application server may be understood as function entities, whose hardware may be integrated, and may also be set independently.

### Embodiment 2

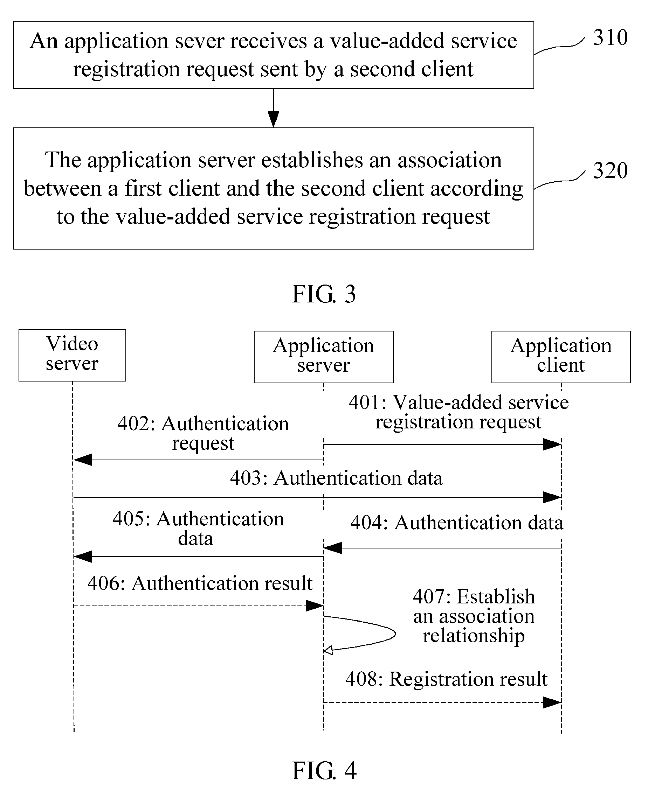

FIG. 3 is a flow chart of a method for implementing a video-based value-added service according to a second embodiment of the present invention. This embodiment may be based on the foregoing embodiments, and specifically relate to a registration process of a value-added service of a second client.

Before implementation of the value-added service, a service registration generally needs to be completed. In the video-based value-added service implemented by this embodiment of the present invention, the registration process mainly completes establishment of an association between clients, which may be completed by a service subsystem, and may also be specifically completed by an application server in the service subsystem or a specific registration server. And then, before the application server forms value-added service content according to preset value-added service data and event data in the event notification, the following steps are further included:

Step 310: The application server receives a value-added service registration request sent by the second client.

Step 320: The application server establishes an association between a first client and the second client according to the value-added service registration request.

The application server may establish the association between the first client and the second client according to the value-added service registration request in multiple manners. For example, specifically the application server acquires a user identifier and an identifier of the first client from the value-added service registration request and stores them accordingly, where the user identifier is used to identify the second client currently used by the user. The user may interact with the application server through any second client, as long as the interaction information carries the user identifier. The user identifier is associated with the second client currently used by the user. Or, the application server may also directly establish the association between the first client and the second client according to an identifier of the first client and an identifier of the second client which are included in the value-added service registration request.

In the foregoing step, the identifier of the first client may be an identifier which may uniquely identify the first client, such as an identifier of a video playing device, an identifier of a video playing set top box, an identifier of an intelligent card of the video playing device, or a physical address or an IP address of the video playing device. Similar to this, the identifier of the second client may be a network address of a computer, or an identifier of a mobile terminal. The value-added service registration request may further include the user identifier which uniquely identifies a user. The second client is taken as a registration client of the user.

The association established by the application server between the first client and the second client according to the value-added service registration request is not limited to a one-to-one association. Preferentially, the application server establishes an association between one or multiple first clients and one second client or a user according to the value-added service registration request, so that an event server simultaneously acquires association event data of the videos currently played by multiple first clients to generate an event notification which is used to be sent to the application server. In this way, it can facilitate combination of the videos currently played by multiple first clients to provide the value-added service. For example, multiple first clients may be playing different video programs relating to a same political event, and then the user may acquire association event data of each of multiple video programs through the second client, and form a value-added service according to their association or commonness.

Alternatively, multiple user identifiers may be permitted to bind a same first client, and user personalization analysis may also be performed for multiple users of one first client to provide different value-added service content for different users. For example, information such as the user's watching preference and time rules may be analyzed, and personalization information is added when video-associated service content is provided for the user.

In this embodiment, before the application server establishes the association between the first client and the second client according to the value-added service registration request, preferentially the following is further included: the application server performs an authorization operation on whether the second client is capable of forming the value-added service content according to association event data of a video on the first client. Subsequently, it may be determined, according to an authorization result, whether to establish the association. The authorization operation is to authenticate whether the second client or a user currently using the second client has the right to bind the video of the first client to implement the value-added service, so as to ensure the user's privacy and working reliability of a system. Or the authorization operation may also be authenticating an association relationship between the second client and the user, for example, whether the user is currently using the second client.

FIG. 4 is a signaling flow chart of registration which corresponds to the second embodiment of the present invention, which shows an interaction process between each network element, and includes the following operations:

Step 401: The second client sends the value-added service registration request to the application server to request registration of a video association application. The value-added service registration request may include the user identifier, an identifier of a user video device, and another registration parameter. The first client and the second client may be both associated with the user identifier.

Step 402: The application server receives the value-added service registration request, and checks whether the registration parameter is valid; if the registration parameter is invalid, the application server requests the second client to perform re-registration, and returns to execute step 401; information such as the user identifier, the identifier of the first client, and the identifier of the second client may be all used as the registration parameter. Checking whether the registration parameter is valid is mainly to check whether each parameter satisfies their individual restriction condition, for example, conditions such as value range, mandatory or optional. If the registration parameter is valid, the application server sends an authorization request to a video server to request the video server to authorize a relationship between the second client and the user, where the authorization request may include the user identifier and the identifier of the second client.

Step 403: After receiving the authorization request, the video server sends authorization data to the second client. This process may have multiple implementation manners. The video server may send an authorization password through a video device, and may also send the authorization password or an authorization code to the second client in another communication manner such as a short message.

Step 404 to 405: The second client returns the authorization data to the video server through the application server.

Step 406: The video server checks the authorization data, that is, it compares whether the received authorization data is consistent with the authorization data which is sent to the second client, and subsequently the video server notifies the application server of the authorization result.

Step 407: When the application server identifies that the authorization result indicates that the authorization is successful, the application server saves the registration information. Specifically, an association is established between the first client and the second client, or an association may also be established between the first client and the user, which is equivalent to establishing an association between the first client and the second client which is subsequently used by the user. The user may associate the two clients with the user identifier, and each user may be associated with one or multiple first clients and second clients.

Step 408: The application server notifies the second client of a registration result.

### Embodiment 3

A method for implementing a video-based value-added service provided in a third embodiment of the present invention may be based on each foregoing embodiment, where the method further optimizes an operation of acquiring by an event server association event data which corresponds to a video currently played by a first client and is as follows:
when receiving a service acquisition request, an application server determines, according to the service acquisition request, a video identifier of a video to be associated, and according to an determined video identifier, the event server acquires corresponding association event data to be the association event data which corresponds to the video currently played by the first client.

The technical solutions according to this embodiment implements acquisition of the association event data based on the video identifier. The association event data may be pre-acquired and stored locally, and may also be acquired in real time when receiving an event acquisition request. For example, for a video server which plays the video for multiple set top boxes, the event server in a service subsystem may pre-acquire association event data of all videos, or gradually add and acquire association event data of each video along with a user's request. Because the number of first clients which simultaneously watch a same video may be large, the event server does not need to repeatedly acquire the association event data.

A system with an architecture shown in FIG. 2 is still taken as an example to describe a specific implementation manner of the foregoing operation, which is as follows:
when receiving the service acquisition request, the application server determines, according to the service acquisition request, the video identifier of the video to be associated and sends an event acquisition request including the video identifier to the event server; and
the event server, according to the video identifier in the received event acquisition request, acquires the corresponding association event data to be the association event data which corresponds to the video currently played by the first client.

In the foregoing solutions, the acquisition of the association event data and the determination of the video identifier are separated. Preferentially, before the application server sends the event acquisition request including the video identifier to the event server, the following may further be included:
the application server, according to the video identifier, judges whether the association event data of the video to be associated is monitored from the event server, if no, continue to execute an operation of sending the event acquisition request including the video identifier to the event server.

In this case, an event where the application server repeatedly requests a same video from the event server may be avoided. If the video to be associated is monitored, another request is not required.

In the technical solutions according to this embodiment, the application server may determine, according to the event acquisition request, the video identifier of the video to be associated in multiple manners, for example, which includes:
the application server parses and acquires the video identifier of the video to be associated from the event acquisition request; or
the application server parses and acquires an identifier of the first client from the event acquisition request, sends a video identifier query request including the identifier of the first client to the video server, and receives a returned video identifier of the video currently played by the first client; or
the application server parses and acquires the user identifier from the event acquisition request, and queries an associated video identifier locally according to the user identifier.

The event acquisition request is generally from a second client, and may be initiatively reported after the user queries the video identifier. Alternatively, it may also be that the application server queries from the video server the video identifier of the video currently played by the first client which is associated with the user or the second client. And preferentially, the video server may provide a video identifier query function for both the client and the application server. That is, the method according to this embodiment further includes: when receiving the video identifier query request from the first client, the second client, or the application server, the video server returns the video identifier of the video currently played by the first client according to the identifier of the first client in the video identifier query request.

The video server provides content information such as the video identifier of the video currently played by a specific first client for querying. The video server may query video content currently played on a video device, according to an identifier of the video device or an identifier of an intelligent card of the video device or another identifier uniquely identifying the video device, such as an IP address and a MAC address. When the second client requests the value-added service associated with the video, if the video identifier of a requested video is not specified, the application server may send a query request to the video server by utilizing the identifier of the first client which is bound during registration of the user, and acquire content currently played by the first client associated with the user currently, where the content currently played by the first client is used for requesting from the event server the association event data of the video content currently played. The video server may query the video identifier of the video currently played by the first client by sending an instruction to the first client, and may also query the video identifier from related information which is of the first client and is stored locally, which may be determined according to a form that the video server provides the video for the first client.

The content currently played may also be queried through the first client and the first client is required to provide a query interface, where the query interface may be provided through multiple protocols, such as infrared, Bluetooth, LAN, and Internet. If the second client has an access interface which corresponds to the first client, the second client may directly establish a connection with the first client, query playing information of the current video, and report the video identifier when requesting the value-added service associated with the video.

Corresponding to a manner where the foregoing application server parses and acquires the user identifier from the event acquisition request and queries the associated video identifier locally according to the user identifier, the method according to this embodiment further includes the following operation: when receiving a video switching notification sent by the video server, the application server updates the video identifier associated with the user identifier to be a video identifier of a switched video in the video switching notification. In this manner, the application server may initiatively maintain correspondence which is between the video identifier and the user and is recorded in the application server, and initiatively instructs the application server to change the association relationship when the currently played video is switched.

In the foregoing solution, an operation of acquiring corresponding association event data by the event server according to the video identifier in the received event acquisition request may be optimized as follows:
the event server locally searches whether the association event data which corresponds to the video identifier is monitored, if yes, acquires the monitored association event data, if no, sends an event registration request to the video server to request and acquire of the association event data of the video which corresponds to the video identifier.

After the event server acquires the corresponding association event data according to the video identifier in the received event acquisition request, the following may be further included:
the event server locally searches whether a video control notification of a corresponding video identifier is monitored, if no, sends a notification registration request to the video server so as to request and acquire of the video control notification of the video which corresponds to the video identifier.

In the foregoing manner, in one aspect, the event server needs to judge whether the video searched by the application server is under monitoring, that is, the association event data is acquired; in another aspect, the event server further judges whether the video control which corresponds to the monitored video is monitored; if yes, the event server needs to request and acquire the video control from the video server.

In the technical solutions according to this embodiment, a manner that the service subsystem acquires the association event data based on the video identifier may prevent repeated acquisition of the same association event data.

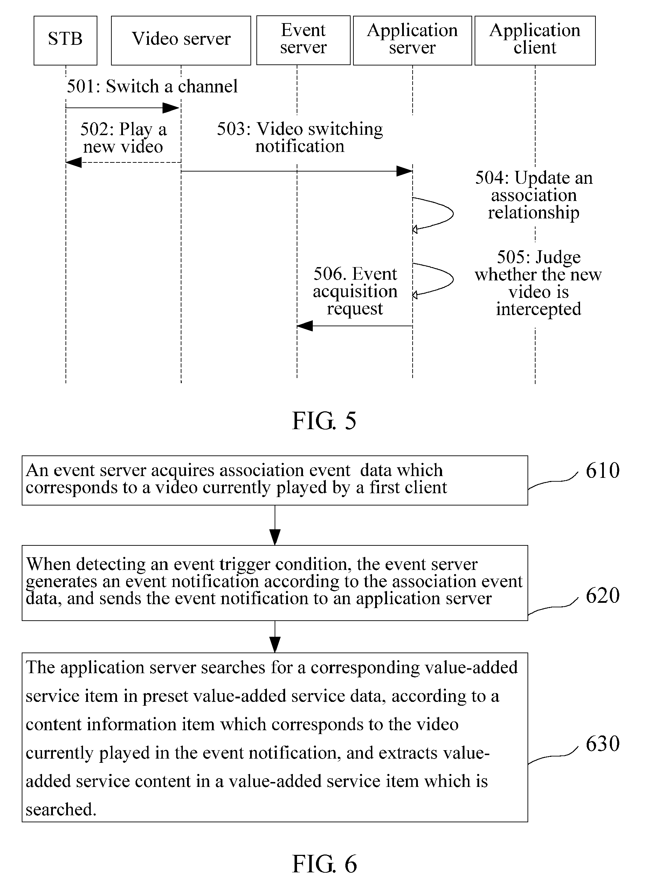

FIG. 5 is a signaling flow chart relating to a video switching processing process in a method for implementing the video-based value-added service according to the third embodiment of the present invention. The video switching processing process involves an update case of the associated video identifier, which includes the following steps:

Step 501: The user requests the video server to switch played video content, for example, switching a channel, through a video device controller of the first client.

Step 502: The video server switches the video content, and plays a new video for the video device of the first client terminal.

Step 503: The video server sends the video switching notification to the application server to notify that the video device switches to new video content, where the video switching notification includes at least a video identifier of the video after switching.

Step 504: The application server updates an association relationship between the user or the second client and the video identifier.

Step 505: The application server may subsequently check whether association event data of the new video is monitored, and performs step 506 if the association event data of the new video is not monitored.

Step 506: The application server sends an event acquisition request of the video to the event server.

During the foregoing process, when the user uses a video playing device controller to switch a video playing channel or content, the video server needs to notify the application server of switching of the video content. The application server may update the video content which binds the value-added service according to a content switching notification. The application server may update a focused registration event for the event server and acquire an event related to video content to which the user newly switches. The event server notifies the application server of a related event after the user switches the playing content, and the application server generates value-added service content according to the event.

### Embodiment 4

FIG. 6 is a flow chart of a method for implementing a video-based value-added service according to a fourth embodiment of the present invention. This embodiment may be based on the foregoing embodiments, and further optimizes an operation of forming value-added service content. Taking a system with an architecture shown in FIG. 2 as an example for description, the method of this embodiment includes:

Step 610: An event server acquires association event data which corresponds to a video currently played by a first client.

Step 620: When detecting an event trigger condition, the event server generates an event notification according to the association event data, and sends the event notification to an application server.

As in the foregoing description, a service subsystem detects event trigger conditions such as a time trigger condition, an attribute trigger condition, or a control trigger condition, which may be performed by the event server.

Step 630: The application server searches for a corresponding value-added service item in preset value-added service data, according to a content information item which corresponds to the video currently played in the event notification, and extracts value-added service content in a value-added service item which is searched.

In the technical solutions according to this embodiment, the event server is used to be responsible for triggering the event notification, and the application server is used to be responsible for forming the value-added service content. In addition, a manner of forming the value-added service content by the application server is optimized.

The association event data may be typically formed in the video server. Definitely, the association event data may also be preconfigured on another server or network element.

One manner of forming the association event data may be associating one or multiple association event data for a video file in advance, and forming an association event data stream. For example, different association event data may be formed for a certain TV play corresponding to the playing content at different playing moments. Or, the association event data is extracted from existing preconfigured information of the video file, and then, the acquiring the association event data which corresponds to the video content of the video currently played includes: extracting, by the event server, content information which corresponds to the video content from the preconfigured information of the video currently played, and forming the association event data. For example, extracting from information in subtitles of the video. The foregoing manner is more applicable to a prerecording video file, and the association event data stream may be manually edited and configured. For a video file live-played in real time, the content information of the video currently played may also be extracted by adopting an image identification technology or another technology which can identify video content.

The content of the association event data may be designed according to the requirements. For example, a video subtitle file of the video currently played may be directly used as the association event data. The association event data may also be another feature data which is synchronized with an image of the played video. The feature data includes some feature information in the video content, for example, feature events such as a famous historical figure, era background, a historical event, a scenic spot, costumes, stage properties, and time, where the feature events appear in the video or a dialogue. The association event data which corresponds to each video includes multiple event items. Each event item includes information such as event type, event trigger condition, event item name, and event description. A classification standard may be defined for the event type according to specific application requirements of the application. For example, the event may be classified into the following:

Knowledge event: introduces background knowledge-specific events such as era background, figure profile, and term explanation in the current video.

Object event: an object appears in the current video content, and an advertising opportunity may be provided for a commodity which corresponds to the object.

Figure event: a figure appears in the video.

Scenic spot event: a scenic spot or a landscape appears in the video.

Question and answer event: questions and answers such as quiz with prizes and questionnaire survey that appear in the video.

A format of the event data may change according to a specific implementation manner. For ease of description in the following, association event data in an extensible markup language (Extensible Markup Language, abbreviated as XML) format is provided as an example. The association event data includes channel name (channelName), channel ID (channeled), program name (contentName), program ID (contentId), and event item (item). The association event data may include multiple event items, where each event item includes information such as event type (type), event item name (eventName), time (time), and event item data (data).
<?xml version="1.0" encoding="UTF-8"?>
<eventSet>
<channelName>CCTV1</channelName>
<channelId>001</channelId>
<contentName>Football World</contentName>
<contentId>164859</contentId>
<item>
<type>Knowledge</type>
<eventName>European Cup</eventName>
<trigger>
<time>1H:20Min:10Sec</time>
</trigger>
<data>The UEFA Champions League (UEFA CHAMPIONS LEAGUE) is the most prestigious club competition in Europe football, originally known as the European Champion Club's Cup which is created in the season of 1955/56. In 1992, the UEFA amends the structure and name of this tournament...
</data>
</item>
</item>
<type>Knowledge</type>
<eventName>Bernabéu Stadium</eventName>
<trigger>
<time>1H:20Min:20Sec</time>
</trigger>
<data>The full name of the Bernabéu Stadium is Santiago Bernabéu Stadium (Estadio Santiago Bernabéu). Santiago Bernabéu is one of the most important men in Real Madrid's history, who successfully leads and completes this giant project. The stadium is named after him...
</data>
</item>
</eventSet>

The foregoing event trigger condition, which may be as described in the foregoing, and is specifically the time trigger condition, the attribute trigger condition, and the control trigger condition.

The application server may generate, according to the received event notification, various value-added service content and send the content to one or multiple second clients of the user.

The event notification is formed by the event server according to the association event data. The application server may generate, according to a received knowledge event notification, video assistance service content; and may generate, according to the object event notification, corresponding advertisement value-added service content. The application server may further add some hyperlinks in the generated value-added service content to provide convenient interaction for the user to acquire additional information. The application server may further receive an interaction request of the user, and return requested information to the user.

An example is taken for description in the following, where an application server provides an advertisement for video content and receives an event notification sent by the event server, which is shown as follows:

```
          <event>
          <type>figure</type>
          <eventName>Johnson</eventName>
          <data>
```

Johnson.

Football.

World Cup.

Final match.

Score a goal.

Two minutes before the end of the match.

```
          </data>
          </event>
```

The event notification is generated in a video program of a football match video. During a process of playing the video, the event server triggers an event notification and sends the notification to the application server. After receiving the event notification, the application server parses the event notification, and analyzes the event type and the event content. For example, in the foregoing example of the event notification, the event type is a figure event, and the event is that a player named Johnson scores a goal two minutes before the final of the World Cup competition ends. An advertisement server, which is taken as the application server, may use the event content in the event notification, that is, keywords such as "Johnson", "World Cup", "final match", and "score a goal", to perform advertisement matching. It is assumed that in an advertisement system, an advertisement task list is as shown in Table 1.

**Table 1**

| Advertisement Task Name | Task ID | Delivering Condition | Material |
|---|---|---|---|
| Promotion of Pepsi Cola | 0001024 | "half-time interval" or "football" or "basketball" | p0001557.jpg |
| 2011 new arrival of Adidas football shoes | 0035663 | "Johnson" and "final match" and "score a goal" | p02345667.jpg |
| Yunnan Baiyao | 0236783 | "a player injures " and ("football" or "basketball") | p25634677.jpg |

As shown in Table 1, a certain advertisement owner orders an advertisement task. The advertisement task is "presenting a piece of material about football shoes when Johnson scores a goal in the World Cup final". The advertisement system uses "Johnson", "World Cup", "final match", and "score a goal" in the event notification to perform character string matching in the "delivering condition" column in the task list row by row. The task requires that the keyword condition which the advertisement request satisfies is: "Johnson", and "score a goal", and "final match". The event content in the current event notification is "Johnson", "World Cup", "final match", and "score a goal", which satisfies the condition of the task "2011 new arrival of Adidas football shoes", and therefore, the advertisement task is matched. The advertisement server matches the task, and acquires an advertisement picture from the advertisement system according to "material id". An advertisement delivering message is generated by utilizing the picture, and the message is pushed to the second client to present a video advertisement of football shoes.

### Embodiment 5

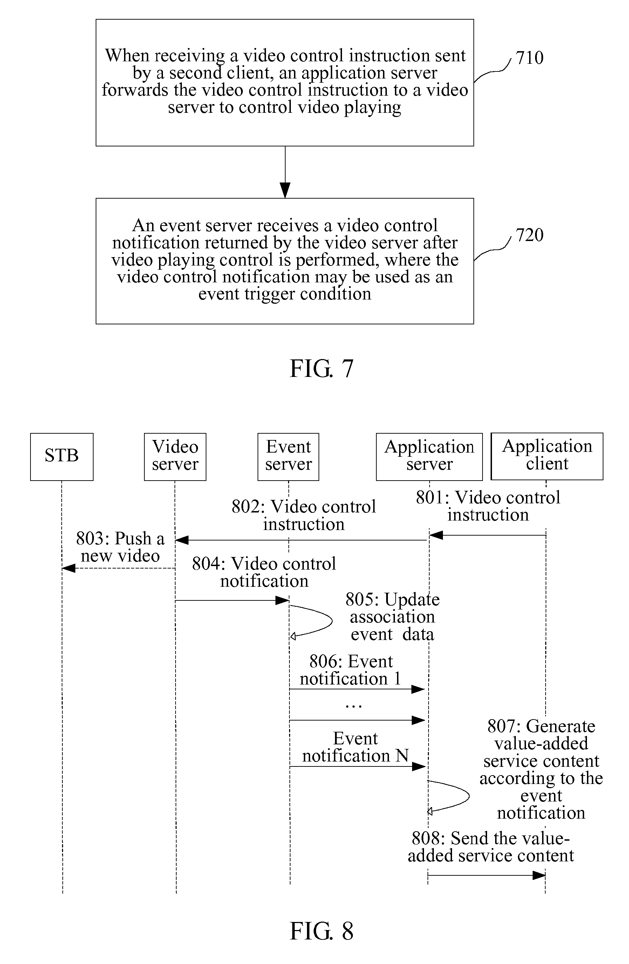

FIG. 7 is a flow chart of a method for implementing a video-based value-added service according to a fifth embodiment of the present invention. This embodiment may be based on the foregoing embodiments, and further enrich functions of a value-added service. The method according to this embodiment may further perform control of a terminal over video playing during an implementation process of the method provided in each foregoing embodiment, which specifically performs the following operations:

Step 710: When receiving a video control instruction sent by a second client, an application server forwards the video control instruction to a video server to control video playing.

Step 720: An event server receives a video control notification returned by the video server after video playing control is performed, where the video control notification may be used as an event trigger condition.

Accordingly, the video server may perform the following operations:
the video server controls the video playing when receiving the video control instruction which is from the application server or the second client; and
the video server sends a video playing control action as the video control notification to the event server.

Based on a system architecture shown in FIG. 2, the video control instruction may be forwarded through the application server to the video server. Alternatively, the video server may also directly receive the video control instruction from the second client.

This embodiment may be typically applicable to a case that a user watches TV. When the user is watching TV, the user's attention focuses on the TV. After the video-based value-added service content is pushed to the second client, the user may shift focus in a process of browsing the value-added service content. In this case, during a process of acquiring the value-added service content, the user does not desire to miss watching the video content, and an intelligent device used as the second client may need to be capable of controlling the video playing, rather than perform the operation through a controller which is of a video playing device used as a first client. This greatly facilitates the user's operations. The second client sends the video control instruction, for example, pause, replay, and backtrack, to the application server. The application server sends the video control instruction to the video server after receiving the video control instruction. The video server performs necessary authentication and authorization, and confirms that the video control instruction is an operation instruction which is from an authorized user. And then, the video server may process the video control instruction, and controls the video content currently played by the first client through a video service subsystem, for example, an EPG server in an IPTV system.

FIG. 8 is a signaling flow chart of video playing control which corresponds to the fifth embodiment of the present invention, including the following steps:

Step 801: The second client sends the video control instruction to the application server.

Step 802: The application server receives the video control instruction, and forwards the video control instruction to the video server. The video control instruction may be directly sent, and may also be forwarded through the event server.

Step 803: After receiving the video control instruction, the video server controls the video currently played on the first client according to the video control instruction, for example, pushing a new video to an STB.

Step 804: Because the video currently played on the first client may change, association event data may be accordingly formed, and the video control notification may also be generated because of control of the video service. This embodiment uses the video control notification as an example to continue to describe a subsequent process. The video server returns the video control notification to the event server.

Step 805: The event server updates, according to the video control notification, the association event data, and modifies the event trigger condition in a data file. For example, the control operation is pausing video playing. The event server needs to pause a timer in the time trigger condition which corresponds to the video and ensure synchronous playing of the video content.

Step 806: The event server executes the association event data of the video, and judges whether the event trigger condition is satisfied; if yes, an event notification is generated and delivered to the application server, and the value-added service continues to be implemented. Multiple times of event trigger conditions may appear. Therefore, the event server may send multiple event notifications, as shown in FIG. 8, event notification 1, ..., event notification N. For example, when the received event control notification is a "pause" event, the event server triggers an advertisement event notification to the application server.

Step 807: The application server generates value-added service content according to the received event notification.

Step 808: The application server delivers the value-added service content to the second client.

### Embodiment 6

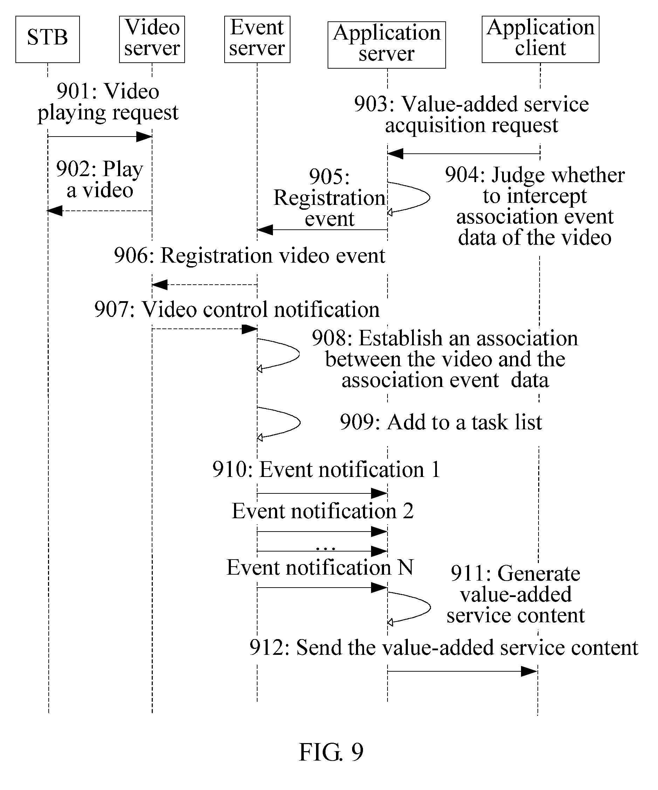

FIG. 9 is a signaling flow chart of a method for implementing a video-based value-added service according to a sixth embodiment of the present invention. This embodiment may specifically introduce a process of requesting and acquiring a value-added service by a user based on the foregoing embodiments.

During a process of playing video content by the user through a first client, the user may use a second client to request a value-added service associated with a video currently played. In one aspect, the user controls the first client to request a video server to play the video, and the video server plays the video according to the request. In another aspect, the user requests through the second client from an application server the value-added service associated with the video currently played by the first client. FIG. 9 shows a signaling process which is executed based on a system architecture as shown in FIG. 2, including the following steps:

Step 901: The user sends a video playing request to the video server through the first client. In this embodiment, the first client is described by taking an STB which is connected to a television as an example.

Step 902: The video server provides, according to the video playing request, a video stream for the first client to play, and the video server records a video identifier of the video currently played by the first client, for example, recording information that can identify the video, such as channel ID, video program name, and video ID.

Step 903: The second client sends a value-added service acquisition request to the application server, where the request may carry information that can reflect the first client which is associated with the second client, for example, a user identifier of a user which is associated with the first client, or an identifier of the first client. The request may further carry requirements on the value-added service, such as the video specified in an association set by the user, and a video identifier may be included in the request.

Step 904: The application server judges whether the value-added service acquisition request includes the video identifier. If the request does not include the video identifier, the application server may query from the video server the identifier of the video currently played by a video playing device. Subsequently, the application server judges whether association event data which is associated with the video is monitored from the event server.

Step 905: If the application server does not currently monitor the association event data of the video, the application server registers an event with the event server, and registers monitoring of the association event data of the video; if the application server is monitoring the association event data of the video, the application server records an association relationship between the video identifier and the second client in a video application table, and directly monitors an event notification which is formed according to the association event data and sent by the event server.

Step 906: The event server receives an event acquisition request associated with the video, queries whether an event task which corresponds to the video exists in a local task list, and subscribes to the association event data of the video from the video server if the task list does not include the video. The event server further queries locally whether an event trigger condition of the association event data of the video is under monitoring, especially a control trigger condition of a video control instruction; if no, the event server may further request from the video server monitoring of the video control instruction of the video.

Step 907: The video server returns information such as current progress of the video as a video control notification. For example, when the video server has a control instruction for the video, it notifies the event server of the following, for example, playing progress, ending, and pause.

Step 908: The event server associates the video identifier with the acquired association event data.

Step 909: The event server adds the association event data of the video to an event task list, and the event server scans the association event data in the task list periodically or scans when receiving the video control notification, and detects, according to the task list, whether the event trigger condition is satisfied.

Step 910: When detecting that the event trigger condition is satisfied, the event server forms an event notification for all association event data which satisfies the trigger condition, respectively, and sends the notifications to the application server.

Step 911: After receiving the event notification, the application server generates value-added service content according to the content in the event notification.

Step 912: The application server delivers the value-added service content to the second client.

In this embodiment, after receiving the request from the second client, the application registers with the event server to request receipt of the event notification of the video currently played by the user. The application server queries, according to the user identifier, from the video server the video identifier of the video currently played by the user, and the application server requests the association event data of the video content from the event server. The event server executes an event file, triggers an event notification satisfying the condition, and sends the triggered event notification to the application server. The event trigger condition may be defined according to the application, for example, including time condition, user attribute condition, geographic location condition, and device attribute condition. The event trigger condition may be sent by the application server to the event server when the application server registers the event request with the event server. The event server parses the event trigger condition, and sends the event notification satisfying the event trigger condition to the application server. After receiving the event notification, the application server parses event notification content, generates value-added service content according to the event notification content, and sends the generated value-added service content to the second client. After receiving the value-added service content, the second client presents the content on a client interface.

### Embodiment 7

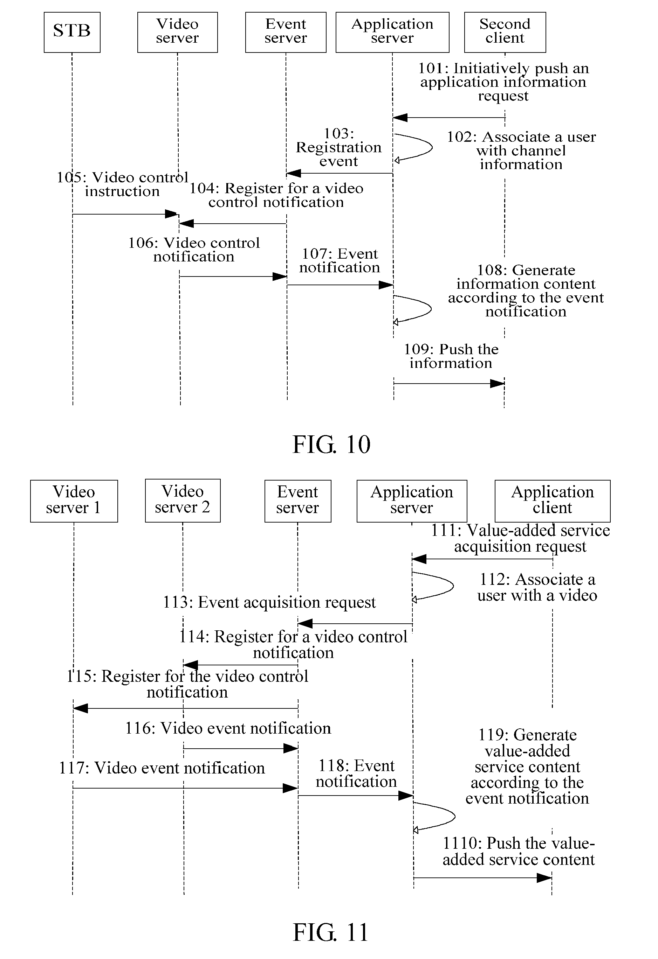

FIG. 10 is a signaling flow chart of a method for implementing a video-based value-added service according to a seventh embodiment of the present invention. This embodiment may be based on the foregoing embodiments, and specifically introduce a process for a user to acquire an initiatively pushed service by pre-subscription, including the following steps:

Step 101: A second client sends an initiative pushing request for application information to an application server, which is a type of value-added service acquisition request.

Step 102: The application server saves a binding relationship between a user and a video, that is, setting a binding relationship between the user and the video. Binding may be implemented through a user identifier and a video identifier in the information request.

Step 103: The application server checks whether association event data of the video is registered with an event server; if it is not registered, the application server registers a focused event with the event server.

Step 104: The event server checks whether the association event data of the video is acquired from a video server and whether a video control notification of the video is registered; if the video control notification is not registered and acquired, the event server registers it with the video server.

Step 105: A first client sends a video control instruction to the video server.

Step 106: The video server plays the video according to the video control instruction, and sends the video control notification to the event server.

Step 107: The event server detects an event trigger condition by using the video control notification, and generates an event notification to provide it for the application server when the event trigger condition is satisfied.

Step 108: The application server determines, according to the event notification, whether to generate initiative notification information; if a condition for generating initiative notification information is satisfied, information content is generated as value-added service content, where the condition for the initiative notification information may be set according to requirements.

Step 109: The application server pushes the initiative notification information to the second client.

The technical solutions according to this embodiment further optimize the video-based value-added service and provide the initiative notification information which is associated with the video for the user.

### Embodiment 8

FIG. 11 is a signaling flow chart of a method for implementing a video-based value-added service according to an eighth embodiment of the present invention. This embodiment may be based on the foregoing embodiments, and specifically introduce a process of forming value-added service content by combining association event data provided by multiple video servers, including the following steps:

Step 111: A second client sends a value-added service acquisition request to an application server.

Step 112: The application server requests, according to user requirements indicated in the value-added service acquisition request, association event data of videos currently played by two different first clients. For example, a common political event reported in news programs played on two different channels is extracted. An event requesting two videos may be embodied by setting two video identifiers, and may also be embodied by associating two first clients and then querying two video identifiers. The application server stores an association relationship between the second client and the video identifier.

Step 113: The application server sends an event acquisition request to an event server, where the event acquisition request includes the event acquisition request for two videos.

Steps 114 to 117: Similar to the foregoing embodiments, the event server acquires association event data for the two videos, registers and acquires a video control notification with a corresponding video server, and receives the video control notification returned by a video server to the event server.

Step 118: The event server sends an event notification to the application server when judging, according to a received video control notification, that an event trigger condition is satisfied.

Step 119: The application server generates value-added service content according to an acquired event notification.

Step 1110: The application server pushes the value-added service content to the second client.

This embodiment implements pushing of multiple video-associated value-added services, and further enriches types of video-based value-added services.

The technical solutions according to the embodiments of the present invention provide a solution of associating an event value-added service based on the video content. In this solution, an association event data stream which is synchronized with a video stream is utilized. The video-related service may utilize an event stream which is associated with a video to generate value-added service content, and present generated value-added service content to a user through an intelligent device. This solution provides rich and accurate presenting opportunities and data sources of value-added services and advertisements for a video value-added service. In addition, the video value-added services and advertisements may be independently presented on the intelligent device so as to provide a simple and convenient user operation manner for the user. The operation manner is not limited to an interaction manner using a remote controller or buttons of a set top box. Further, a presentation manner of inter-cutting or overlapping service content in the video content is got rid of, and multiple presentation manners may be provided, thereby improving user experience. The user may interact with the video value-added service through the intelligent device, rather than in a passive manner of receiving information of the video value-added service.

The embodiment of the present invention further provides another method for implementing the video-based value-added service. The implementation method is a solution executed by a second client side, including the following steps:

The second client sends a service acquisition request and receives returned value-added service content. Specifically, the service acquisition request may be sent to a service subsystem or the application server under an architecture shown in FIG. 2. The value-added service content is formed according to association event data which corresponds to a video currently played by a first client.

Based on the foregoing technical solutions, the second client may further send a value-added service registration request, where the value-added service registration request includes an identifier of the second client and an identifier of the first client to be associated to request establishment of an association between the first client and the second client. With reference to the foregoing embodiments, a meaning of the identifier of the second client may cover a device identifier and an address identifier that are of the second client, and may also be a user identifier. The user identifier can associate with the second client currently used by the user.

Preferentially, before the second client sends a service acquisition request, the second client may also send a video query request for querying a video currently played by the first client to the video server, and receive a returned video identifier. The second client sets the video identifier in the service acquisition request. In this technical solution, the second client can query the video identifier, and further specifies a video to be associated with the value-added service in the service acquisition request.

Further, the second client may further send a video control instruction which controls the video currently played by the first client to control the video server so as to control the video playing of the video currently played by the first client.

According to the technical solutions of this embodiment of the present invention, the event server generates association event data that is synchronized with the video content, and generates an event notification which is closely associated with played video content. The application server can generate multiple types of video-associated value-added service content by using a rich, accurate, and real-time event notification, thereby providing support capabilities for a carrier and a service provider to develop a high-value value-added service. The restriction of capability and the limit of the interaction manner which are of a video playing device is got rid of by presenting the content of the value-added service which is associated with the video on the second client which is independent of a video playing screen. This provides convenient interaction experience and rich presentation manners for the user, and does not interfere with video watching experience of the user.

### Embodiment 9

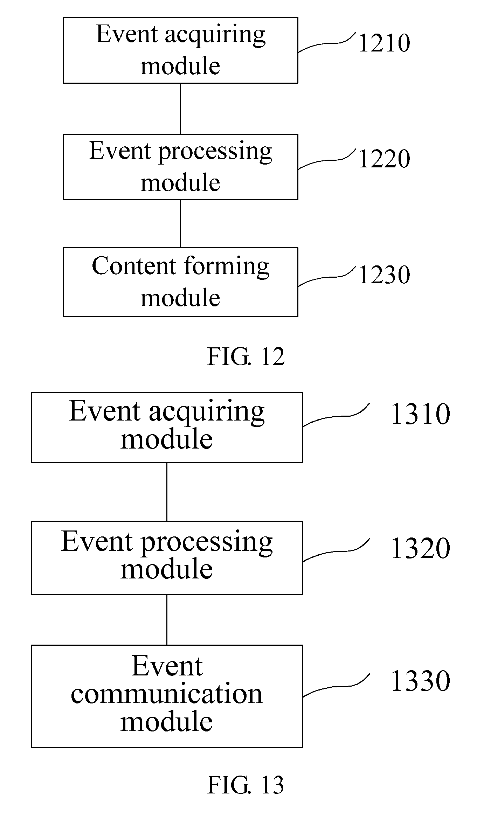

FIG. 12 is a schematic structural diagram of a service subsystem according to a ninth embodiment of the present invention. The service subsystem includes: an event acquiring module 1210, an event processing module 1220, and a content forming module 1230. The event acquiring module 1210 is configured to acquire association event data which corresponds to a video currently played by a first client; the event processing module 1220 is configured to, when detecting an event trigger condition, generate an event notification according to the association event data, and send the event notification to the content forming module 1230. The content forming module 1230 is configured to form value-added service content according to preset value-added service data and event data in the event notification, and provide the value-added service content for a second client.

The service subsystem provided in this embodiment can provide rich value-added services for a user in combination with the video currently played, and optimize the matching between a video and its associated service.

The foregoing event acquiring module preferentially includes: an identifier identifying unit and a data acquiring unit. The identifier identifying unit is configured to determine, when receiving a service acquisition request and according to the service acquisition request, a video identifier of a video to be associated; and the data acquiring unit is configured to, according to a determined video identifier, search to acquire association event data which corresponds to the video identifier locally in the service subsystem, or request to acquire the association event data which corresponds to the video identifier from a video server.

In addition, the service subsystem may further include a service registering module, which is configured to receive a value-added service registration request sent by the second client, and establish an association between the first client and the second client according to the value-added service registration request.

The service subsystem provided in this embodiment of the present invention is not limited to an exemplary setting structure of a function module, and it may further perform the method for implementing a video-based value-added service provided in any embodiment of the present invention, and set corresponding function modules according to specifically required functions.

Each function module of the service subsystem may be integrated and implemented on a same service platform, and may also be set on different servers separately for implementation. For example, the foregoing event server and application server are set.

### Embodiment 10

FIG. 13 is a schematic structural diagram of an event server according to a tenth embodiment of the present invention. The event server includes an event acquiring module 1310, an event processing module 1320, and an event communication module 1330. The event acquiring module 1310 is configured to acquire association event data which corresponds to a video currently played by a first client; the event processing module 1320 is configured to, when detecting an event trigger condition, generate an event notification according to the association event data; and the event communication module 1330 is configured to send the event notification to an application server to instruct the application server to form value-added service content according to the event notification and provide the value-added service content for a second client.

The event server provided in this embodiment of the present invention may have corresponding function modules and execute a method for implementing a video-based value-added service according to the foregoing embodiments. The event server may mainly include an event acquiring module, an event processing module, and an event communication module. The event acquiring module receives and stores an association event data file for the event processing module to query, receives a video control event notification from a video server, and triggers the event processing module to execute event data. The event processing module is responsible for parsing an event, executing the association event data file, and processing an event acquisition request from the application server. The event communication module is responsible for receiving the event registration request from the application server, generating an event notification for the event satisfying a trigger condition, and sending the event notification to the application server.

### Embodiment 11

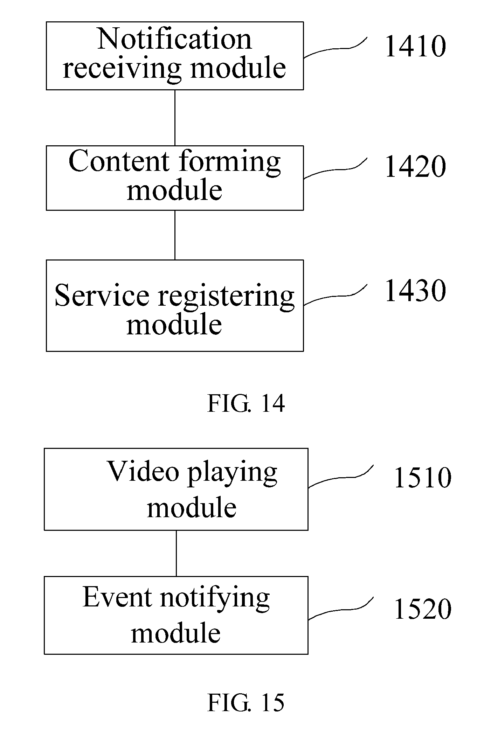

FIG. 14 is a schematic structural diagram of an application server according to an eleventh embodiment of the present invention. The application server includes a notification receiving module 1410, a content forming module 1420, and a service registering module 1430. The notification receiving module 1410 is configured to receive an event notification generated by an event server according to association event data, where the association event data corresponds to a video currently played by a first client; the content forming module 1420 is configured to form value-added service content according to preset value-added service data and event data in the event notification, and provide the value-added service content for a second client; and the service registering module 1430 is configured to receive a value-added service registration request sent by the second client, and establish an association between the first client and the second client according to the value-added service registration request.

The application server provided in this embodiment of the present invention may have corresponding function modules and execute a method for implementing a video-based value-added service according to the foregoing embodiments. The application server includes a notification receiving module, a content forming module, and a service registering module. The notification receiving module is responsible for receiving the event notification from the event server, and it may also be further configured to generate an event acquisition request or an event registration request, and registers a focused event with the event server so as to receive the event notification from the event server. The content forming module generates value-added service content according to the event notification. The service registering module is responsible for receiving a service registration request from the second client, and establishing the association between the first client and the second client so as to send the value-added service content to the second client which is associated with the first client.

### Embodiment 12

FIG. 15 is a schematic structural diagram of a video server according to a twelfth embodiment of the present invention. The video server includes a video playing module 1510 and an event notifying module 1520. The video playing module 1510 is configured to provide a video playing service for a first client; and the event notifying module 1520 is configured to provide for a service subsystem association event data which corresponds to a video currently played by the first client, so as to form value-added service content according to the association event data.

Preferentially, the video server further includes: an information querying module and a video control module. The information querying module is configured to, when receiving a video identifier query request from the first client, a second client, or the service subsystem, return a video identifier of the video currently played by the first client according to an identifier of the first client in the video identifier query request; and the video control module is configured to, when receiving a video control instruction from the service subsystem or the second client, control video playing and send a video playing control action as a video control notification to the service subsystem.

The video server provided in this embodiment of the present invention may have corresponding function modules and execute a method for implementing a video-based value-added service according to the foregoing embodiments.

The video server provided in the embodiments of the present invention can receive a video playing request from the first client, where the video playing request includes a series of functions such as authentication, authorization, and coding and decoding of channel and content for a video playing device, for example, a television, of a user. Further, the video server can further provide a function of querying video content currently played by the first client, receiving control signals, and having a notification mechanism when the played video content is switched. The video server mainly includes a video providing module, a video information querying module, an event notifying module, and a video control module. The video providing module is configured to provide video content for the video playing device. The video providing module may be an IPTV subsystem, and may also be another digital television subsystem. The video information querying module is responsible for providing a function of querying video information, such as currently played content and progress, of the device according to an identifier of a user video device. The event notifying module is responsible for sending a content change message of a played video to the service subsystem or an event server in the service subsystem, and may also send an association event data file which corresponds to the video to the service subsystem or the event server in the service subsystem. The video control module is responsible for receiving a video playing control request from the second client, and is configured to control a video playing progress.

The video server, the event server, and the application server which are provided in the foregoing embodiments of the present invention may work collaboratively to perform the method for implementing the video-based value-added service provided in the present invention. Rich value-added services can be provided for the user in combination with the video currently played, thereby optimizing the matching between the video and its associated service. In addition, through a solution design where a function of acquiring the association event data is set to be independent of a function of forming of the value-added service, a function of processing events may be independent of the value-added service, the application server processes the value-added services facing each second client, and the event server is responsible for processing the association event data of each played video. The video may be provided for thousands of first clients simultaneously. The event server can process the association event data of the video in a unified manner, and provide the event notification for multiple application servers with different requirements, so as to match requirements of multiple application servers or multiple value-added services.

Persons skilled in the art may understand that all or a part of steps of the foregoing method embodiments may be completed by a program instructing relevant hardware. The foregoing program may be stored in a computer readable storage medium. When the program is executed, the steps of the foregoing method embodiments are executed. The foregoing storage medium includes various mediums which are capable of storing program codes, such as a ROM, a RAM, a magnetic disk, or a compact disk.

Finally, it should be noted that the foregoing embodiments are merely provided for describing the technical solutions of the present invention, but not intended to limit the present invention. Persons skilled in the art should understand that although the present invention is described in detail with reference to the foregoing embodiments, modifications may still be made to the technical solutions recorded in each foregoing embodiment, or equivalent replacements may still be made to some technical features in the technical solutions, while these modifications or replacements do not cause the essence of corresponding technical solutions to depart from the spirit and scope of the technical solutions in each embodiment of the present invention.

## Claims

1. A method for implementing a video-based value-added service, comprising:
acquiring, by an event server, association event data which corresponds to a video currently played by a first client;
generating, by the event server, an event notification according to the association event data when detecting an event trigger condition, and sending the event notification to an application server; and
forming, by the application server, value-added service content according to preset value-added service data and event data in the event notification, and providing the value-added service content for a second client.

2. The method for implementing the video-based value-added service according to claim 1, wherein the first client and the second client are different clients.

3. The method for implementing the video-based value-added service according to claim 1 or 2, wherein the detecting, by the event server, the event trigger condition comprises:
when the event server detects that the current time is consistent with a time trigger condition in the association event data, the event trigger condition is detected;
when the event server judges that attribute information in a received event acquisition request is consistent with an attribute trigger condition in the association event data, the event trigger condition is detected; or
when the event server judges that a control operation in a received video control notification is consistent with a control trigger condition in the association event data, the event trigger condition is detected.

4. The method for implementing the video-based value-added service according to claim 1, wherein before the forming, by the application server, the value-added service content according to the preset value-added service data and the event data in the event notification, the method further comprises:
receiving, by the application server, a value-added service registration request sent by the second client; and
establishing, by the application server, an association between the first client and the second client according to the value-added service registration request.

5. The method for implementing the video-based value-added service according to claim 4, wherein the establishing, by the application server, the association between the first client and the second client according to the value-added service registration request comprises:
acquiring, by the application server, a user identifier and an identifier of the first client from the value-added service registration request, and accordingly storing the user identifier and the identifier of the first client, wherein the user identifier is used to identify the second client currently used by a user.

6. The method for implementing the video-based value-added service according to claim 4, wherein before the establishing, by the application server, the association between the first client and the second client according to the value-added service registration request, the method further comprises:
performing, by the application server, an authorization operation on whether the second client can form the value-added service content according to association event data of a video on the first client.

7. The method for implementing the video-based value-added service according to claim 4, wherein the establishing, by the application server, the association between the first client and the second client according to the value-added service registration request comprises:
establishing, by the application server, an association between one or multiple first clients and one second client according to the value-added service registration request, so that the event server simultaneously acquires association event data of videos currently played by multiple first clients to generate the event notification which is used to be sent to the application server.

8. The method for implementing the video-based value-added service according to claim 1, wherein the acquiring, by the event server, the association event data which corresponds to the video currently played by the first client comprises:
determining, when receiving a service acquisition request, by the application server and according to the service acquisition request, a video identifier of a video to be associated; and acquiring, by the event server and according to a determined video identifier, corresponding association event data as the association event data which corresponds to the video currently played by the first client.

9. The method for implementing the video-based value-added service according to claim 8, wherein when receiving the service acquisition request, the determining, by the application server and according to the service acquisition request, the video identifier of the video to be associated; and acquiring, by the event server and according to the determined video identifier, the corresponding association event data as the association event data which corresponds to the video currently played by the first client comprise:
determining, when receiving the service acquisition request, by the application server according to the service acquisition request, the video identifier of the video to be associated and sending an event acquisition request comprising the video identifier to the event server; and
acquiring, by the event server and according to the video identifier in a received event acquisition request, corresponding association event data as the association event data which corresponds to the video currently played by the first client.

10. The method for implementing the video-based value-added service according to claim 9, wherein before the sending, by the application server, the event acquisition request comprising the video identifier to the event server, the method further comprises:
judging, by the application server according to the video identifier, whether association event data of the video to be associated is monitored from the event server, if no, continuing to perform an operation of sending the event acquisition request comprising the video identifier to the event server.

11. The method for implementing the video-based value-added service according to claim 9, wherein the determining, by the application server according to the service acquisition request, the video identifier of the video to be associated comprises:
parsing to acquire, by the application server, the video identifier of the video to be associated from the event acquisition request; or
parsing to acquire, by the application server, an identifier of the first client from the event acquisition request, sending a video identifier query request comprising the identifier of the first client to a video server, and receiving the video identifier of the video currently played by the first client; or
parsing to acquire, by the application server, a user identifier from the event acquisition request, and querying the associated video identifier locally according to the user identifier.

12. The method for implementing the video-based value-added service according to claim 9, wherein the acquiring, by the event server, the corresponding association event data according to the video identifier in the received event acquisition request comprises:
searching, by the event server locally, whether the association event data which corresponds to the video identifier is monitored, if yes, acquiring monitored association event data, if no, sending an event registration request to a video server to request to acquire the association event data of a video which corresponds to the video identifier.

13. The method for implementing the video-based value-added service according to claim 12, wherein after the acquiring, by the event server, the corresponding association event data according to the video identifier in the received event acquisition request, the method further comprises:
searching, by the event server locally, whether a video control notification which corresponds to the video identifier is monitored, if no, sending a notification registration request to the video server to request to acquire the video control notification of the video which corresponds to the video identifier.

14. The method for implementing the video-based value-added service according to claim 9, further comprising:
when receiving a video identifier query request from the first client, the second client, or the application server, returning, by the video server, the video identifier of the video currently played by the first client according to an identifier of the first client in the video identifier query request.

15. The method for implementing the video-based value-added service according to claim 9, further comprising:
when receiving a video switching notification sent by a video server, updating, by the application server, the video identifier associated with a user identifier to be a video identifier of a switched video in the video switching notification.

16. The method for implementing the video-based value-added service according to claim 1, wherein the forming, by the application server, the value-added service content according to the preset value-added service data and the event data in the event notification comprises:
searching for, by the application server, a corresponding value-added service item in preset value-added service data, according to a content information item which corresponds to the video currently played in the event notification, and extracting value-added service content in a value-added service item which is searched.

17. The method for implementing the video-based value-added service according to claim 1, further comprising:
when receiving a video control instruction sent by the second client, forwarding, by the application server, the video control instruction to a video server to control video playing; and
receiving, by the event server, a video control notification returned by the video server after video playing control is performed.

18. The method for implementing the video-based value-added service according to claim 17, further comprising:
controlling, by the video server, the video playing when receiving the video control instruction from the application server or the second client; and
sending, by the video server, a video playing control action as the video control notification to the event server.

19. A method for implementing a video-based value-added service, comprising:
sending, by a second client, a service acquisition request, and receiving returned value-added service content, wherein the value-added service content is formed according to association event data which corresponds to a video currently played by a first client.

20. The method for implementing the video-based value-added service according to claim 19, further comprising:
sending, by the second client, a value-added service registration request, wherein the value-added service registration request comprises an identifier of the second client and an identifier of a first client to be associated, so as to establish an association between the first client and the second client.

21. The method for implementing the video-based value-added service according to claim 19, wherein before the sending, by the second client, the service acquisition request, the method further comprises:
sending, by the second client and to a video server, a video query request for querying the video currently played by the first client, and receiving a returned video identifier; and
setting, by the second client, the video identifier in the service acquisition request.

22. The method for implementing the video-based value-added service according to claim 19, further comprising:
sending, by the second client, a video control instruction which controls the video currently played by the first client to control a video server so as to control the video playing of the video currently played by the first client.

23. A service subsystem, comprising:
an event acquiring module, configured to acquire association event data which corresponds to a video currently played by a first client;
an event processing module, configured to, when detecting an event trigger condition, generate an event notification according to the association event data, and send the event notification to a content forming module; and
a content forming module, configured to form value-added service content according to preset value-added service data and event data in the event notification, and provide the value-added service content for a second client.

24. The service subsystem according to claim 23, wherein the event acquiring module comprises:
an identifier identifying unit, configured to, when receiving a service acquisition request and according to the service acquisition request, determine a video identifier of a video to be associated; and
a data acquiring unit, configured to, according to a determined video identifier, locally search to acquire association event data which corresponds to the video identifier in the service subsystem, or request to acquire association event data which corresponds to the video identifier from a video server.

25. The service subsystem according to claim 23, further comprising:
a service registering module, configured to receive a value-added service registration request sent by the second client, and according to the value-added service registration request, establish an association between the first client and the second client.

26. An event server, comprising:
an event acquiring module, configured to acquire association event data which corresponds to a video currently played by a first client;
an event processing module, configured to, when detecting an event trigger condition, generate an event notification according to the association event data; and
an event communication module, configured to send the event notification to an application server to instruct the application server to form value-added service content according to the event notification and provide the value-added service content for a second client.

27. An application server, comprising:
a notification receiving module, configured to receive an event notification generated by an event server according to association event data, wherein the association event data corresponds to a video currently played by a first client;
a content forming module, configured to form value-added service content according to preset value-added service data and event data in the event notification, and provide the value-added service content for a second client; and
a service registering module, configured to receive a value-added service registration request sent by the second client, and according to the value-added service registration request, establish an association between the first client and the second client.

28. A video server, comprising:
a video playing module, configured to provide a video playing service for a first client; and
an event notifying module, configured to provide for a service subsystem association event data which corresponds to a video currently played by the first client, so as to form value-added service content according to the association event data.

29. The video server according to claim 28, further comprising:
an information querying module, configured to, when receiving a video identifier query request from the first client, a second client, or the service subsystem, return a video identifier of the video currently played by the first client according to an identifier of the first client in the video identifier query request; and
a video control module, configured to, when receiving a video control instruction from the service subsystem or the second client, control video playing and send a video playing control action as a video control notification to the service subsystem.
